(19) Europäisches Patentamt / European Patent Office / Office européen des brevets

(11) **EP 2 833 121 A1**

(12) **EUROPEAN PATENT APPLICATION**
published in accordance with Art. 153(4) EPC

(43) Date of publication:
04.02.2015 Bulletin 2015/06

(51) Int Cl.:
*G01N 5/02* (2006.01)

(21) Application number: 13768046.8

(86) International application number:
PCT/JP2013/058688

(22) Date of filing: 26.03.2013

(87) International publication number:
WO 2013/146732 (03.10.2013 Gazette 2013/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 27.03.2012 JP 2012070693

(71) Applicant: Sumitomo Precision Products Co., Ltd.
Amagasaki-shi, Hyogo 660-0891 (JP)

(72) Inventor: TORAYASHIKI Osamu
Amagasaki-shi
Hyogo 660-0891 (JP)

(74) Representative: Zimmermann & Partner
Josephspitalstr. 15
80331 München (DE)

(54) **PHYSICAL QUANTITY SENSOR**

(57) A physical quantity sensor 100 includes: first and second oscillators 1, 2 that are supported by a support member 9; first and second detection devices 4, 5 for detecting the oscillations of the first and second oscillators respectively; a sensor element 6 that is provided on the first or second oscillator and has characteristics capable of adsorbing and/or desorbing a measurement object; an elastic device 7 for coupling the first and second oscillators to each other; and a calculation device 8 for determining a frequency at which the vibrating device 3 vibrates the first oscillator. The calculation device determines the frequency so as to maximize the amplitude of the second oscillator, and calculates the mass or concentration of the measurement object on the basis of the ratio of the amplitude of the second oscillator to the amplitude of the first oscillator when the vibrating device vibrates the first oscillator.

Figure 1

**Description**

[Technical Field]

The present invention relates to an oscillating-type physical quantity sensor that includes two oscillators. In particular, the present invention relates to a physical quantity sensor that can highly accurately measure the mass or concentration of a measurement object without being affected by the Q factor.

[Background Art]

Conventionally, various sensors that detect the mass or concentration of a measurement object existing in an atmosphere have been proposed. These sensors include oscillating-type physical quantity sensors that utilize cantilever type oscillators as physical quantity sensors that detect the mass or concentration of a minute measurement object. The oscillating-type physical quantity sensor typically vibrates the oscillators in an atmosphere containing a measurement object. The oscillating-type physical quantity sensor measures the mass or concentration of the measurement object using the fact that change in mass due to adhesion of a measurement object to the oscillator causes the resonance frequency of the oscillators to change.

Non Patent Literature 1 proposes a configuration of a physical quantity sensor where two cantilever type oscillators are coupled with an elastic device. It is suggested that a smaller spring constant of the elastic device further increases the measurement resolution in the case of measuring a minute mass.

It has been known that generally in an oscillating-type physical quantity sensor using cantilever type oscillators, there arises a problem of reduction of the measurement accuracy with reduction of the Q factor, which is a characteristic value indicating the sharpness of a signal. It should be noted that the Q factor varies owing to such factors as changes in resistance and temperature, due to the atmosphere.

[Citation List]

[Non Patent Literature]

[Non Patent Literature 1] Spletzer et al., "Ultrasensitive mass sensing using mode localization in coupled microcantilevers", Applied Physics Letters, American Institute of Physics, 88, 254102 (2006)

[Summary of Invention]

[Technical Problem]

The present invention has been made in order to solve such a problem in the conventional art, and has an object to provide a physical quantity sensor that can highly accurately measure the mass or concentration of a measurement object without being affected by the Q factor.

[Solution to Problem]

In order to achieve the above described object, the present invention provides a physical quantity sensor, comprising: a support member; a first oscillator supported by the support member; a vibrating device adapted to vibrate the first oscillator at a prescribed frequency; a first detection device adapted to detect oscillations of the first oscillator; a second oscillator supported by the support member; a second detection device adapted to detect oscillations of the second oscillator; a sensor element that is provided on the first oscillator or the second oscillator and has characteristics capable of adsorbing and/or desorbing a measurement object; an elastic device adapted to couple the first oscillator and the second oscillator to each other; and a calculation device adapted to determine the prescribed frequency and to calculate a mass or concentration of the measurement object, wherein the calculation device is adapted to determine the prescribed frequency so as to maximize an amplitude $U_{O2}$ of the second oscillator detected by the second detection device, and is adapted to calculate the mass or concentration of the measurement object based on a ratio $U_{O2}/U_{O1}$ of the amplitude $U_{O2}$ of the second oscillator detected by the second detection device to an amplitude $U_{O1}$ of the first oscillator detected by the first detection device when the vibrating device vibrates the first oscillator at the determined frequency.

In the physical quantity sensor according to the present invention, the first oscillator is supported by the support member. Accordingly, the first oscillator oscillates with the supported portion serving as a pivot. The first oscillator is vibrated by the vibrating device at the prescribed frequency. The first detection device detects the oscillations of the first oscillator (e.g., the amplitude, phase, frequency, etc. of oscillations). The second oscillator is also supported by the support member. Accordingly, the second oscillator oscillates with the supported portion serving as a pivot. The second detection device detects the oscillations of the second oscillator (e.g., the amplitude, phase, frequency, etc. of oscillations).

The sensor element of the present invention has characteristics capable of adsorbing and/or desorbing the measurement object. Accordingly, the mass of the sensor element increases with the measurement object in an atmosphere adsorbed, and the mass of the sensor element reduces with the measurement object desorbed into the atmosphere. Since the sensor element is provided on the first oscillator or the second oscillator, the mass of the sensor element affects the oscillations of the first oscillator or the second oscillator. In other words, the resonance frequency of the oscillators changes with the change in mass of the sensor element.

The elastic device has elasticity, and couples the first oscillator to the second oscillator. Accordingly, the oscillations of the first oscillator and the oscillations of the second oscillator propagate to each other through the elastic device.

The inventors have found that if the vibrating device vibrates the first oscillator at the prescribed frequency so as to maximize the amplitude $U_{O2}$ of the second oscillator detected by the second detection device, the amplitude ratio of the amplitude $U_{O2}$ to the amplitude $U_{O1}$ of the first oscillator detected by the first detection device is not affected by the Q factor and does not change. Then the inventors have diligently studied under an inference that there is a possibility that if the vibrating device vibrates the first oscillator at the prescribed frequency, the mass or concentration can be measured without being affected by the overlap of the amplitude of in-phase oscillations and the amplitude of opposite-phase oscillations and the Q factor. As a result, the inventors have acquired knowledge that the mass or concentration of the measurement object can be calculated on the basis of the amount of change in $U_{O2}/U_{O1}$.

On the basis of the foregoing knowledge, the calculation device has a configuration that determines the prescribed frequency at which the vibrating device vibrates the first oscillator and calculates the mass or concentration of the measurement object. More specifically, the calculation device determines the prescribed frequency so as to maximize the amplitude $U_{O2}$. When the vibrating device vibrates the first oscillator at the frequency determined by the calculation device, the calculation device calculates the mass or concentration of the measurement object on the basis of the ratio $U_{O2}/U_{O1}$ of the amplitude $U_{O2}$ of the second oscillator detected by the second detection device to the amplitude $U_{O1}$ of the first oscillator detected by the first detection device.

As a result, in measurement of the mass or concentration of the measurement object, the physical quantity sensor according to the present invention exerts an advantageous effect of providing highly accurate measurement of the mass or concentration of the measurement object without being affected by the Q factor.

Here, if the spring constant of the elastic device is configured to be small in order to increase the measurement resolution in the case where the physical quantity sensor measures a minute mass, the overlap of the amplitudes of the resonance frequency of in-phase oscillations (the resonance frequency where the phase of oscillations of one oscillator is identical to the phase of oscillations of the other oscillator) and the resonance frequency of opposite-phase oscillations (the resonance frequency where the phase difference between the phase of oscillations of one oscillator and the phase of oscillations of the other oscillator is 180°) concerning their oscillations significantly occur. Accordingly, the measurement of the resonance frequency is inclined to be affected by the Q factor. The physical quantity sensor according to the present invention is not affected by the Q factor. Accordingly, even if the overlap between the amplitudes significantly occurs, the mass or concentration of the measurement object can be highly accurately measured.

It should be noted that the portion at which the first oscillator is supported by the support member may be, for instance, one end or the opposite ends of the first oscillator, or any one point which is not limited to an end. The portion at which the second oscillator is supported by the support member may also be, for instance, one end or the opposite ends of the second oscillator, or any one point which is not limited to an end. The force with which the vibrating device vibrates the first oscillator is acquired through use of, for instance, a piezoelectric effect, an electromagnetic force or an electrostatic attraction. The first detection device, which detects the amplitude of the first oscillator, may be provided on the first oscillator and use a piezoelectric effect. Alternatively, this detection device may be not only that using an electromagnetic force or an electrostatic attraction, but also a laser displacement meter or the like provided outside of the first oscillator. Likewise, the second detection device, which detects the amplitude of the second oscillator, may be provided on the second oscillator and use a piezoelectric effect. Alternatively, this detection device may be not only that using an electromagnetic force or an electrostatic attraction, but also a laser displacement meter or the like provided outside of the second oscillator.

The prescribed frequency to be determined by the calculation device is determined so as to maximize the amplitude $U_{O2}$. Alternatively, this frequency may be determined so as to maximize the ratio $U_{O2}/U_{IN}$ of the amplitude $U_{O2}$ to the amplitude of the vibrating device (hereinafter, referred to as amplitude $U_{IN}$).

In the calculation device of the present invention, the calculation of the mass or concentration of the measurement object based on $U_{O2}/U_{O1}$ covers a concept that is not only calculation of the mass or concentration of the measurement object using $U_{O2}/U_{O1}$ itself, but also calculation of the mass or concentration of the measurement object using, for instance, $U_{O1}/U_{O2}$.

Here, as a result of diligent study, the inventors have found that as the vibrating frequency changes, the phase difference between the phase of oscillations of the first oscillator and the phase of vibrations of the vibrating device changes, and, when the vibrating device vibrates the first oscillator at a frequency maximizing the amplitude $U_{O2}$, the phase difference between the phase of oscillations of the first oscillator and the phase of vibrations of the vibrating device becomes 90°. The present invention can have a configuration based on such knowledge.

That is, in order to achieve the above described object, the present invention also provides a physical quantity sensor, comprising: a support member; a first oscillator supported by the support member; a vibrating device adapted to vibrate the first oscillator at a prescribed frequency; a first detection device adapted to detect oscillations of the first oscillator; a second oscillator supported by the support member; a second detection device adapted to detect oscillations of the second oscillator; a sensor element that is provided on the first oscillator or the second oscillator and has characteristics capable of adsorbing and/or desorbing a measurement object; an elastic device adapted to couple the first oscillator and the second oscillator to each other; and a calculation device adapted to determine the prescribed frequency and to calculate a mass or concentration of the measurement object, wherein the calculation device is adapted to increase and reduce a frequency at which the vibrating device vibrates the first oscillator in proximity to a first order resonance frequency or proximity to a second order resonance frequency to determine the prescribed frequency such that a phase difference between a phase of oscillations of the first oscillator detected by the first detection device and a phase of vibrations of the vibrating device is 90°, and is adapted to calculate the mass or concentration of the measurement object based on a ratio $U_{O2}/U_{O1}$ of an amplitude $U_{O2}$ of the second oscillator detected by the second detection device to an amplitude $U_{O1}$ of the first oscillator detected by the first detection device when the vibrating device vibrates the first oscillator at the determined frequency.

Such an invention can correctly determine the prescribed frequency. In other words, the prescribed frequency at which the amplitude $U_{O2}$ is maximized is easily acquired. The phase difference is not instantaneously measured, which is in a manner different from that for the maximum value of amplitude. Instead, the phase difference is acquired by measuring continuous variation in amplitude. Accordingly, measurement of the phase difference is hardly affected by noise or the like.

Preferably, the vibrating device and the first detection device are piezoelectric films that are provided on the first oscillator and have a piezoelectric effect, and the second detection device is a piezoelectric film that is provided on the second oscillator and has a piezoelectric effect.

According to such a preferable configuration, the vibrating device and the first detection device are provided on the first oscillator, and the second detection device is provided on the second oscillator. Accordingly, the entire size of the physical quantity sensor can be reduced.

Preferably, if the sensor element has characteristics capable of adsorbing the measurement object, the amplitude $U_{O1}$ and the amplitude $U_{O2}$ are substantially identical to each other before the sensor element adsorbs the measurement object, and if the sensor element has characteristics capable only of desorbing the measurement object, the amplitude $U_{O1}$ and the amplitude $U_{O2}$ are substantially identical to each other before the sensor element desorbs the measurement object.

Such a preferable configuration increases the rate of change in ratio $U_{O2}/U_{O1}$ of the amplitude $U_{O2}$ to the amplitude $U_{O1}$ due to change in mass of the sensor element. Accordingly, this configuration facilitates detection of change in mass. That is, the measurement accuracy of the physical quantity sensor can be improved.

Preferably, the sensor element is an adsorption film capable of adsorbing the measurement object.

Such a preferable configuration can reduce the resistance due to an atmosphere during oscillations of the first oscillator or the second oscillator. Accordingly, this configuration can more correctly measure the amplitude, phase and frequency of oscillations. That is, the measurement accuracy of the physical quantity sensor can be improved.

[Advantageous Effect of Invention]

As described above, the present invention can provide a physical quantity sensor capable of highly accurately measuring the mass or concentration of the measurement object without being affected by the Q factor.

[Brief Description of Drawings]

Figure 1 is a schematic diagram of a physical quantity sensor according to an embodiment of the present invention.
Figure 2 shows an oscillation model of a two-degree-of-freedom spring-mass system.
Figure 3 is a graph showing the change in amplitude ratio of in-phase oscillations in response to a minimal change in the mass.
Figure 4 is a graph showing the change in amplitude ratio of opposite-phase oscillations in response to a minimal change in the mass.

Figure 5 is a graph showing the change in amplitude ratio of in-phase oscillations in response to a minimal change of the mass.

Figure 6 is a graph showing the change in amplitude ratio of in-phase oscillations in response to a minimal change in the mass.

Figure 7 is a graph showing the change in the ratio of the amplitude of oscillations to the amplitude of applied vibrations with respect to the change in angular frequency for applying vibrations.

Figure 8 is a graph showing the change in the ratio of the amplitude of oscillations to the amplitude of applied vibrations with respect to the change in angular frequency for applying vibrations.

Figure 9 is a graph showing the change in amplitude ratio of the amplitude of the overlap of in-phase and opposite-phase oscillations to the amplitude of applied vibrations with respect to the change in angular frequency for applying vibrations.

Figure 10 is a graph showing the change in phase difference with respect to the change in angular frequency for applying vibrations.

Figure 11 is a schematic diagram of a modification of a physical quantity sensor according to an embodiment of the present invention.

[Description of Embodiments]

(Oscillation Model of This Embodiment)

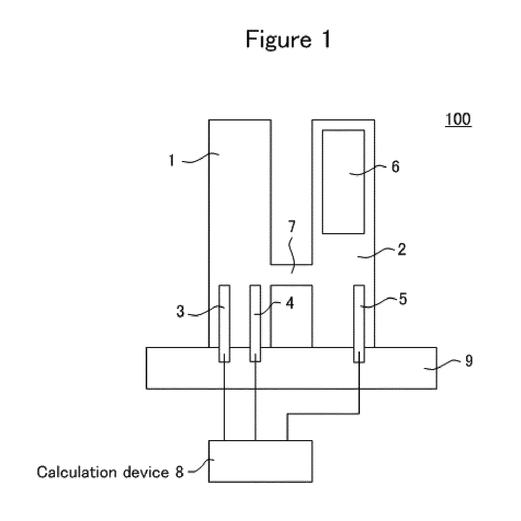

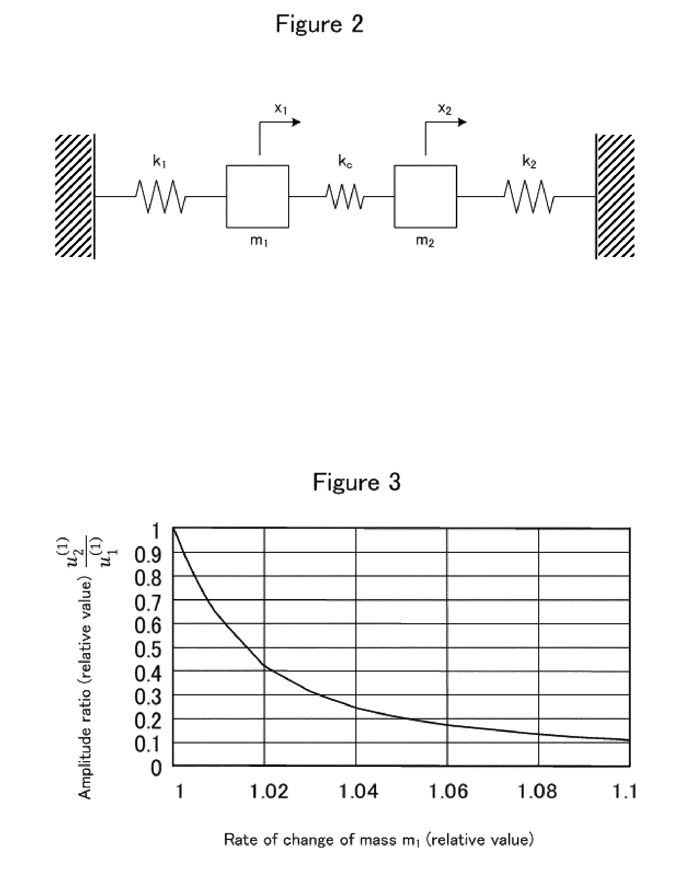

Hereinafter, referring to the accompanying drawings, a physical quantity sensor according to an embodiment of the present invention is described. Figure 1 is a schematic diagram of a physical quantity sensor according to an embodiment of the present invention. Figure 2 shows an oscillation model of a two-degree-of-freedom spring-mass system. As shown in Figure 1, the physical quantity sensor 100 according to this embodiment includes a first oscillator 1, a second oscillator 2, and an elastic device 7 that has elasticity and couples these oscillators. Thus, the oscillations of the first oscillator 1 and the second oscillator 2 can be converted into the motion of a two-degree-of-freedom spring-mass system as show in Figure 2. More specifically, it can be defined that the spring constant of the first oscillator 1 is $k_1$, the spring constant of the second oscillator 2 is $k_2$, the spring constant of the elastic device 7 is $k_c$, the mass of the first oscillator 1 and a member that oscillates integrally with the first oscillator 1 is $m_1$, the mass of the second oscillator 2 and a member that oscillates integrally with the second oscillator 2 is $m_2$, the amount of displacement of the oscillations of the first oscillator 1 is $x_1$, and the amount of displacement in the oscillations of the second oscillator 2 is $x_2$.

In Figure 2, in the case of assuming an undamped system, the equation of motion is represented by the following Expression (1).

$$
\begin{aligned}
m_1\ddot{x}_1 + (k_1 + k_c)x_1 - k_c x_2 = 0 \\
m_2\ddot{x}_2 + (k_2 + k_c)x_2 - k_c x_1 = 0
\end{aligned}
\quad \cdots \quad (1)
$$

Here, provided that the first oscillator 1 oscillates at an angular frequency $\omega$ and an amplitude $u_1$ and the second oscillator 2 oscillates at the angular frequency $\omega$ identical to that of the first oscillator and at an amplitude $u_2$, the amount of displacement $x_1$ of the oscillations of the first oscillator 1 and the amount of displacement $x_2$ of the oscillations of the second oscillator 2 are represented by the following Expression (2) where the time is t and the phase is $\phi$.

$$
\begin{aligned}
x_1(t) = u_1 \cos(\omega t - \phi) \\
x_2(t) = u_2 \cos(\omega t - \phi)
\end{aligned}
\quad \cdots \quad (2)
$$

Accordingly, the angular frequency $\omega$ satisfying the foregoing Expressions (1) and (2) satisfies the following Expression (3).

$$
\varpi^4 - \left( \frac{k_1 + k_c}{m_1} + \frac{k_2 + k_c}{m_2} \right)\varpi^2 + \frac{k_1 k_2 + (k_1 + k_2)k_c}{m_1 m_2} = 0 \quad \cdots \quad (3)
$$

From the foregoing Expression (3), the following Expression (4) can be derived, where the first order resonance frequency is $\omega_1$ and the second order resonance frequency is $\omega_2$.

$$\varpi_1^2, \varpi_2^2 = \frac{1}{2}\left(\frac{k_1 + k_c}{m_1} + \frac{k_2 + k_c}{m_2}\right) \mp \sqrt{\frac{1}{4}\left(\frac{k_1 + k_c}{m_1} + \frac{k_2 + k_c}{m_2}\right)^2 - \frac{k_1 k_2 + (k_1 + k_2)k_c}{m_1 m_2}} \quad \cdots \quad (4)$$

Furthermore, from the foregoing Expressions (1) and (2), the following Expression (5) can be derived in terms of the amplitude ratio of the amplitude of the second oscillator 2 to the amplitude of the first oscillator 1, where the amplitude of the first order natural oscillation of the first oscillator 1 is $u_1^{(1)}$, the amplitude of the second order natural oscillation of the first oscillator 1 is $u_1^{(2)}$, the amplitude of the first order natural oscillation of the second oscillator 2 is $u_2^{(1)}$, and the amplitude of the second order natural oscillation of the second oscillator 2 is $u_2^{(2)}$.

$$\frac{u_2^{(i)}}{u_1^{(i)}} = \frac{k_c}{k_2 + k_c - m_2 \varpi_i^2} = \frac{k_1 + k_c - m_1 \varpi_i^2}{k_c} \quad \cdots \quad (5)$$
$$(i = 1, 2)$$

According to the foregoing Expression (5), it is understood that the amplitude ratio, the spring constant, the mass and the resonance frequency correlate with each other.

Here, provided that $m_1 = m_2 = m$ and $k_1 = k_2 = k$, the following Expression (6) can be derived from the foregoing Expression (4) in terms of the resonance frequencies $\omega_1$ and $\omega_2$.

$$\varpi_1 = \sqrt{\frac{k}{m}} \quad \cdots \quad (6)$$
$$\varpi_2 = \sqrt{\frac{k + 2k_c}{m}}$$

According to the foregoing Expression (6), it is understood that the difference between the first order resonance frequency $\omega_1$ and the second order resonance frequency $\omega_2$ is determined by $k_c$.

Furthermore, from the foregoing Expression (5), the following Expression (7) can be derived in terms of the amplitude ratio.

$$\frac{u_2^{(1)}}{u_1^{(1)}} = 1$$
$$\quad \cdots \quad (7)$$
$$\frac{u_2^{(2)}}{u_1^{(2)}} = -1$$

From the foregoing Expression (7), it is understood that in-phase oscillations with the same amplitude occur at the first order resonance frequency, but opposite-phase oscillations with the same amplitude (with a phase difference of 180°) occur at the second order resonance frequency.

Figure 3 is a graph showing the change in amplitude ratio of in-phase oscillations in response to a minimal change in the mass $m_1$. More specifically, provided that $m_1 = 1 + \Delta m$, $m_2 = 1$, $k_1 = k_2 = 1$ and $k_c = 0.01$, the change in amplitude ratio of in-phase oscillations with respect to the rate of change of $m_1$ is shown.

As shown in Figure 3, when $m_1$ increases by 10% (in the case of $m_1 = 1.1$), the amplitude ratio of in-phase oscillations decreases by about 90% (the amplitude ratio becomes about 0.1). The closer to one the value of $m_1$ is, the higher the rate of change of the amplitude ratio becomes. Accordingly, it can be considered that the measurement accuracy is high in a region where $m_1$ minimally changes.

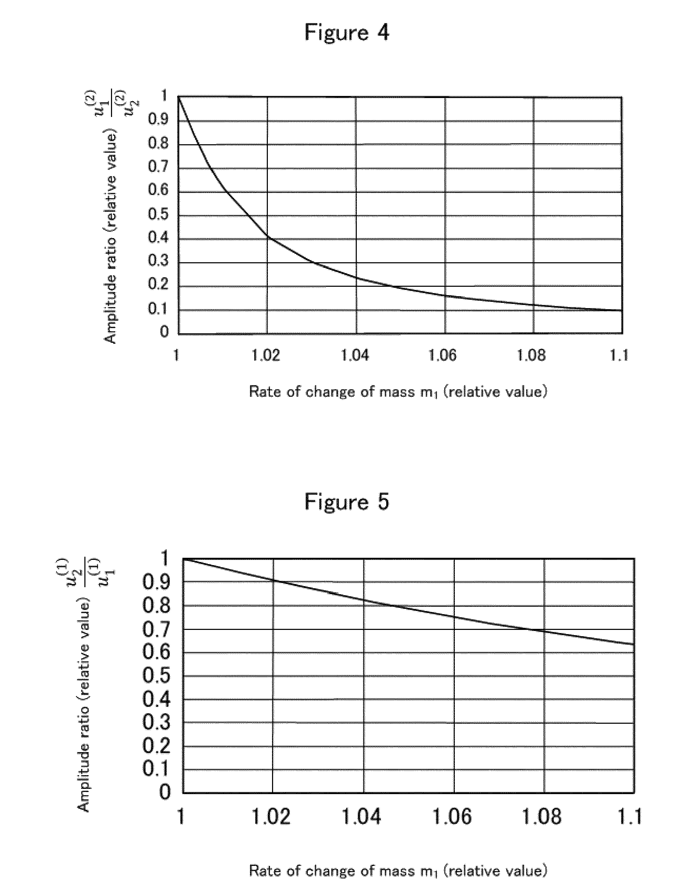

Figure 4 is a graph showing the change in amplitude ratio of opposite-phase oscillations in response to a minimal change in the mass $m_1$. More specifically, in the aforementioned condition where $m_1 = 1 + \Delta m$, $m_2 = 1$, $k_1 = k_2 = 1$ and $k_c = 0.01$, the change in amplitude ratio of opposite-phase oscillations with respect to the rate of change of $m_1$ is shown.

As shown in Figure 4, in a manner analogous to that of the foregoing amplitude ratio of in-phase oscillations, when $m_1$ increases by 10% (in the case of $m_1 = 1.1$), the amplitude ratio of the opposite-phase oscillations decreases by about 90% (the amplitude ratio becomes about 0.1). The closer to one the value of $m_1$ is, the higher the rate of change of the amplitude ratio becomes. Accordingly, it can be considered that the measurement accuracy is high in a region where $m_1$ minimally changes. However, in actuality, while $m_1$ increases, $u_1^{(2)}$ and $u_2^{(2)}$ decrease. Accordingly, it is preferred to measure $u_1^{(1)}/u_1^{(1)}$ instead of $u_1^{(2)}/u_2^{(2)}$. In contrast, while $m_2$ increases, $u_1^{(1)}$ and $u_2^{(1)}$ decrease. Accordingly, it is preferred to measure $u_1^{(2)}/u_2^{(2)}$ instead of $u_2^{(1)}/u_1^{(1)}$.

Figure 5 is a graph showing the change in amplitude ratio of in-phase oscillations in response to a minimal change in the mass $m_1$. More specifically, provided that $m_1 = 1 + \Delta m$, $m_2 = 1$, $k_1 = k_2 = 1$ and $k_c = 0.1$, the change in amplitude ratio of in-phase oscillations with respect to the rate of change of $m_1$ is shown.

As shown in Figure 5, when $m_1$ increases by 10% (in the case of $m_1 = 1.1$), the amplitude ratio of the in-phase oscillations decreases only by about 40% (the amplitude ratio becomes about 0.6). Accordingly, in comparison with the aforementioned case of $k_c = 0.01$, the measurement accuracy decreases. Likewise, also in terms of the amplitude ratio of the opposite-phase oscillations, the measurement accuracy decreases (not shown).

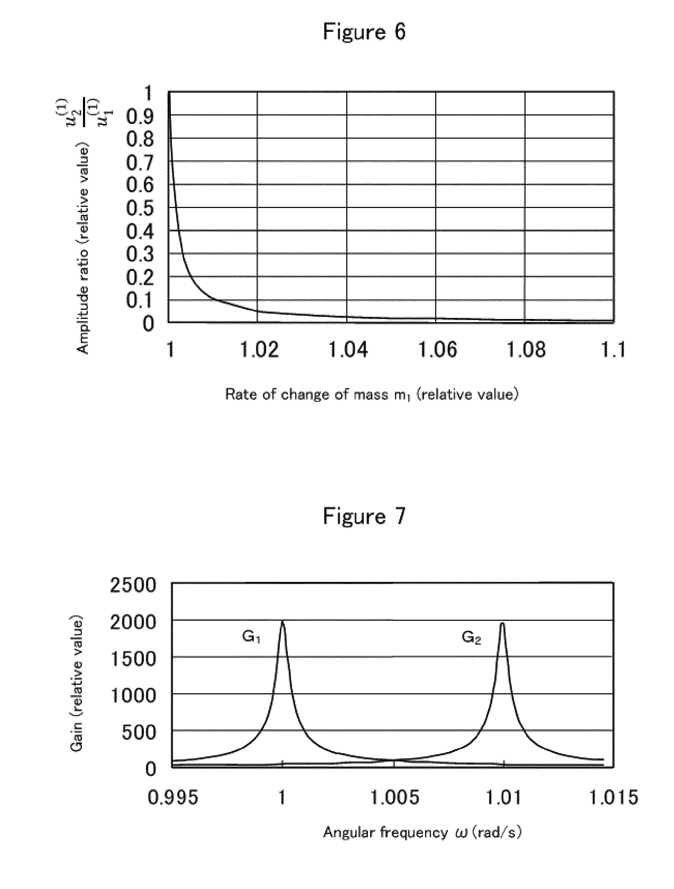

Figure 6 is a graph showing the change in amplitude ratio of in-phase oscillations in response to a minimal change in the mass $m_1$. More specifically, provided that $m_1 = 1 + \Delta m$, $m_2 = 1$, $k_1 = k_2 = 1$ and $k_c = 0.001$, the change in amplitude ratio of in-phase oscillations with respect to the rate of change of $m_1$ is shown.

As shown in Figure 6, in a manner analogous to that of the foregoing amplitude ratio of the in-phase oscillations, when $m_1$ increases by 10% (in the case of $m_1 = 1.1$), the amplitude ratio of in-phase oscillations decreases by about 99% (the amplitude ratio becomes about 0.01). Furthermore, the rate of change of amplitude ratio in the case where $m_1$ has a value close to one becomes much higher than that in the case of $k_c = 0.01$. Accordingly, it can be considered that in a region where $m_1$ minimally changes, the measurement accuracy becomes much higher. Likewise, in terms of the amplitude ratio of opposite-phase oscillations, the measurement accuracy becomes high (not shown).

As described above, in the region where the mass $m_1$ of the first oscillator 1 and the member that oscillates integrally with the first oscillator 1 minimally changes, the smaller the spring constant $k_c$ of the elastic device 7 is, the more largely the amplitude ratio of the amplitude of the second oscillator 2 to the amplitude of the first oscillator 1 changes. In other words, the smaller the spring constant $k_c$ of the elastic device 7 is, the higher the measurement accuracy becomes.

The amplitude ratio of two-degree-of-freedom undamped oscillations has thus been described. As to the amplitudes of vibrations in the cases of applying vibrations in consideration of damping, the first order and second order oscillations will be described as superposition of one-degree-of-freedom oscillation modes that are independent from each other. As shown in Figure 1, in the physical quantity sensor 100 according to this embodiment, the vibrating device 3 vibrates the first oscillator 1. It is defined that the frequency at which the vibrating device 3 vibrates the first oscillator 1 corresponds to an angular frequency $\omega$, and the force is a force F. In the case where the vibrating device 3 vibrates the first oscillator 1 at the angular frequency $\omega$ with the force F, the one-degree-of-freedom oscillation equation is represented by the following Expression (8).

$$\frac{\mathrm{d}^2 x}{\mathrm{d}t^2} + \frac{\varpi_i}{Q}\frac{dx}{dt} + \varpi_i{}^2 x = \frac{F\cos\omega t}{m} \quad \cdots \quad (8)$$

A general solution of the foregoing Expression (8) is represented by the following Expression (9), where the phase difference is a phase difference $\phi_i$.

$$x_i(t) = u_i \cos(\omega t - \phi_i) \quad \cdots \quad (9)$$

Accordingly, from the foregoing Expressions (8) and (9), the following Expression (10) can be derived in terms of the gain that is a ratio of the amplitude of oscillations to the amplitude of applied vibrations (hereinafter, it is denoted

as a gain $G_i$; the gain of in-phase first order oscillations is denoted as a gain $G_1$, and the gain of opposite-phase second order oscillations is denoted as a gain $G_2$) and the phase difference $\phi_i$.

$$G_i = \frac{ku_i}{F} = \frac{1}{\sqrt{\left\{1 - \left(\frac{\omega}{\varpi_i}\right)^2\right\}^2 + \left(\frac{\omega}{Q\varpi_i}\right)^2}}$$

$$\phi_i = \tan^{-1}\frac{\frac{\omega}{Q\varpi_i}}{1 - \left(\frac{\omega}{\varpi_i}\right)^2} \qquad \cdots \quad (10)$$

Figure 7 shows the change in the gain $G_1$ of in-phase first order oscillations and the gain $G_2$ of opposite-phase second order oscillations with respect to the change in angular frequency $\omega$, where $\omega_1 = 1$, $\omega_2 = 1.01$, $Q = 2000$ and $k_c = 0.01$.

As shown in Figure 7, the overlap of the gains $G_1$ and $G_2$ is only about several percent. Accordingly, even if the gain (hereinafter, referred to as a gain W) that is an overlap of the gains $G_1$ and $G_2$ is measured, the angular frequencies at peaks of the gain W substantially match with the angular frequencies at peaks of the gains $G_1$ and $G_2$.

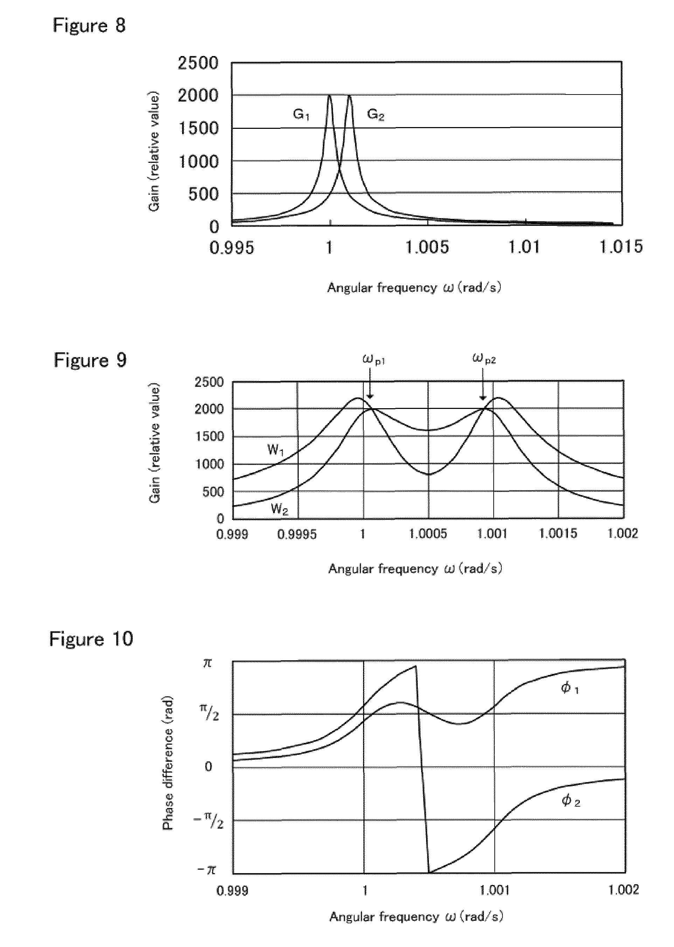

Figure 8 shows the gain $G_1$ of in-phase first order oscillations and the gain $G_2$ of opposite-phase second order oscillations with respect to change in angular frequency $\omega$, where $\omega_1 = 1$, $\omega_2 = 1.001$, $Q = 2000$ and $k_c = 0.001$.

As shown in Figure 8, the overlap of the gains $G_1$ and $G_2$ significantly occurs. It can thus be considered that the angular frequencies at peaks of the gain W do not necessarily match substantially with the angular frequencies at peaks of the gains $G_1$ and $G_2$.

As to oscillations on the side of applied vibrations, the gain $W_1$ that is the overlap of the gains $G_1$ and $G_2$ is affected by the phases of the first order oscillations and the second order oscillations, and in-phase oscillations occur according to the foregoing Expression (7). The gain $W_1$ is thus represented by the following Expression (11).

$$\begin{aligned}
W_1 &= G_1\cos(\omega t + \phi_1) + G_2\cos(\omega t + \phi_2) \\
&= G_1\{\cos(\omega t)\cos\phi_1 - \sin(\omega t)\sin\phi_1\} + G_2\{\cos(\omega t)\cos\phi_2 - \sin(\omega t)\sin\phi_2\} \\
&= (G_1\cos\phi_1 + G_2\cos\phi_2)\cos(\omega t) - (G_1\sin\phi_1 + G_2\sin\phi_2)\sin(\omega t) \qquad \cdots \quad (11)
\end{aligned}$$

As to oscillations on the side opposite to the side of applied vibrations, the gain $W_2$ that is the overlap of the gains $G_1$ and $G_2$ is affected by the phases of the first order oscillations and the second order oscillations, and opposite-phase oscillations occur according to the foregoing Expression (7). The gain $W_2$ is thus represented by the following Expression (12).

$$\begin{aligned}
W_2 &= G_1\cos(\omega t + \phi_1) + G_2\cos(\omega t + \phi_2 + \pi) \\
&= G_1\cos(\omega t + \phi_1) - G_2\cos(\omega t + \phi_2) \\
&= G_1\{\cos(\omega t)\cos\phi_1 - \sin(\omega t)\sin\phi_1\} - G_2\{\cos(\omega t)\cos\phi_2 - \sin(\omega t)\sin\phi_2\} \\
&= (G_1\cos\phi_1 - G_2\cos\phi_2)\cos(\omega t) - (G_1\sin\phi_1 - G_2\sin\phi_2)\sin(\omega t) \qquad \cdots \quad (12)
\end{aligned}$$

Figure 9 is a graph showing the change in amplitude ratio of the amplitude of the overlap of in-phase and opposite-phase oscillations to the amplitude of applied vibrations with respect to the change in frequency at which vibrating device 3 vibrates the first oscillator 1. More specifically, in the case of the condition in the foregoing Figure 8, i.e., $\omega_1 = 1$, $\omega_2 = 1.001$, $Q = 2000$ and $k_c = 0.001$, in terms of the oscillations on the side of applied vibrations and the oscillations on the side opposite to the side of applied vibrations, the change in the gain $W_1$ of the first oscillator 1 and the gain $W_2$ of the second oscillator 2 where the in-phase and opposite-phase oscillations overlap with each other with respect to the change in angular frequency $\omega$ is shown.

As shown in Figure 9, it is understood that the angular frequencies at peaks of the gains $W_1$ and $W_2$ deviate from the resonance frequency ($\omega_1 = 1$, $\omega_2 = 1.001$) as a result of overlapping of the gains $G_1$ and $G_2$. Accordingly, if the spring constant $k_c$ is set small ($k_c = 0.001$), a correct resonance frequency cannot be acquired.

Even if the spring constant $k_c$ is set large, a small Q factor reduces the sharpness of the signal of the gains $G_1$ and $G_2$. Accordingly, the overlap of the gains $G_1$ and $G_2$ occurs. As a result, in a manner analogous to the above description, a correct resonance frequency cannot be acquired. In particular, if the spring constant $k_c$ is small and the Q factor is small, the overlap of the gains $G_1$ and $G_2$ significantly occurs.

The inventors have found that even if the Q factor changes, the ratio $W_2/W_1$ of the gains $W_2$ to $W_1$ has a value that is not affected by the Q factor at angular frequencies (hereinafter, referred to as angular frequencies $\omega_{P1}$ and $\omega_{P2}$) where the gain $W_2$ becomes peaks.

Accordingly, in the schematic diagram shown in Figure 2, if $m_1 = m_2 = m$ and $k_1 = k_2 = k$, application of vibrations at the angular frequencies $\omega_{P1}$ and $\omega_{P2}$ where the gain $W_2$ is at peaks causes the ratio $W_2/W_1$ of the gains $W_2$ to $W_1$ to be one. When the mass of $m_1$ or $m_2$ changes, $W_2/W_1$ changes from one. Here, $W_2/W_1$ is not affected by the Q factor. It can thus be considered that $W_2/W_1$ has a relationship that matches with the amplitude ratio shown in Figures 3 to 6. Accordingly, on the basis of the amount of change in $W_2/W_1$, the changed mass can be calculated. More specifically, the changed mass can be calculated as described later.

Furthermore, the inventors have found that even if the Q factor changes, application of vibrations at angular frequencies where the gain $W_2$ is at peaks causes the phase difference $\phi_1$ between the amplitude of applied vibrations and the amplitude of oscillations on the side of applied vibrations to be 90°.

Figure 10 is a graph showing the change in phase difference with respect to the change in frequency at which the vibrating device 3 vibrates the first oscillator 1. More specifically, in the case of the condition of the foregoing Figure 9, i.e., $\omega_1 = 1$, $\omega_2 = 1.001$, Q = 2000 and $k_c = 0.001$, this graph shows the changes in the phase difference $\phi_1$ between the amplitude of the vibrating device 3 and the amplitude of the first oscillator 1 and in the phase difference $\phi_2$ between the amplitude of the vibrating device 3 and the amplitude of the second oscillator 2, with respect to the change of the angular frequency $\omega$.

As shown in Figure 10, it is understood that at angular frequencies where the gain $W_2$ is at peaks, the phase difference $\phi_1$ is 90°.

(Specific Configuration of This Embodiment)

The physical quantity sensor 100 of this embodiment is configured on the basis of knowledge acquired from the oscillation model. More specifically, as shown in Figure 1, the physical quantity sensor 100 according to this embodiment includes the first oscillator 1, the second oscillator 2 and the support member 9. The first oscillator 1 and the second oscillator 2 are supported by the support member 9. In this embodiment, one end of the first oscillator 1 and one end of the second oscillator 2 are supported by the support member 9. Accordingly, the first oscillator 1 and the second oscillator 2 oscillate on portions that are supported by the support member 9 and serve as respective pivots.

However, the present invention is not limited thereto. The portion where the first oscillator 1 is supported by the support member 9 may be each of the opposite ends of the first oscillator 1. However, the portion is not limited to an end. Alternatively, the portion may be any one point. Likewise, the portion where the second oscillator 2 is supported by the support member 9 may be each of the opposite ends of the second oscillator 2. However, the portion is not limited to an end. Alternatively, the portion may be any one point. Furthermore, both the opposite ends of the first oscillator 1 and the second oscillator 2 may be supported by the support member 9. Alternatively, one point on each of the first oscillator 1 and the second oscillator 2 that is not an end or any multiple points on each of the oscillators may be supported by the support member 9.

For instance, the physical quantity sensor 100 can be fabricated by providing a piezoelectric film for an SOI wafer (silicon), which includes $SiO_2$ used as a BOX layer between Si used as a handle layer and Si used as a device layer, and subjecting the wafer to well-known photolithography and etching. More specifically, a surface of the SOI wafer is oxidized to form $SiO_2$, and a lower electrode (Pt/Ti), a piezoelectric film, and an upper electrode (Au/Ti) are film-formed in this order on the foregoing $SiO_2$ through spattering. The upper electrode, the piezoelectric film, the lower electrode and the device layer are then processed through well-known photolithography and etching to fabricate the vibrating device 3, the first detection device 4 and the second detection device 5, and, at the same time, the first oscillator 1, the second oscillator 2 and the elastic device 7 are formed.

Next, Si that is the handle layer and $SiO_2$ that is the BOX layer are partially etched from the undersurface of the SOI wafer, through well-known photolithography and etching, thereby achieving a state where the portions on which the first oscillator 1 and the second oscillator 2 are supported by the support member 9 serve as fixed ends. An adsorption film that is a sensor element 6 is then formed on a main surface of the second oscillator 2 using a stencil mask or the like. Finally, in an initial state of the sensor element 6 (if the sensor element 6 can adsorb the measurement object, a state before the sensor element 6 adsorbs the measurement object; if the sensor element 6 can only desorb the measurement object, a state before the sensor element 6 desorbs the measurement object), the first oscillator 1 is vibrated, a part of the first oscillator 1 or the second oscillator 2 is appropriately trimmed by laser or the like such that signals of oscillations detected by the first detection device 4 and the second detection device 5 match with each other. In other words, a part of the first oscillator 1 or the second oscillator 2 is appropriately trimmed by laser or the like such that the amplitude of the first oscillator 1 and the member that oscillates integrally with the first oscillator 1 is substantially identical to the amplitude of the second oscillator 2 and the member that oscillates integrally with the second oscillator 2.

If the shapes and materials of the first oscillator 1 and the member that oscillates integrally with the first oscillator 1, the second oscillator 2 and the member that oscillates integrally with the second oscillator 2, and the elastic device 7 are defined, the masses and elastic moduli thereof can be calculated. In this embodiment, the first oscillator 1 and the second oscillator 2 are designed to have analogous shapes and be made of analogous materials. The member that oscillates integrally with the first oscillator 1 and the member that oscillates integrally with the second oscillator 2 are designed to have analogous shapes and be made of analogous materials. However, in fabrication of these elements, fabrication error may occur. Accordingly, in some cases, the sum of masses of the first oscillator 1 and the member that oscillates integrally with the first oscillator 1 does not substantially match with the sum of masses of the second oscillator 2 and the member that oscillates integrally with the second oscillator 2. In these cases, in order to make the sums of the masses substantially match with each other, trimming by laser or the like is performed as described above.

When the physical quantity sensor 100 according to this embodiment measures the concentration of the measurement object in an atmosphere on the basis of the amplitude ratio $U_{O2}/U_{O1}$, a preliminarily acquired relationship between the concentration and the amplitude ratio is used. More specifically, the concentration of the measurement object in the atmosphere is set to a known concentration, subsequently the physical quantity sensor 100 is operated, and the amplitude ratio $U_{O2}/U_{O1}$ is verified, thereby preliminarily acquiring the relationship between the concentration and the amplitude ratio $U_{O2}/U_{O1}$. Then, in an atmosphere with an unknown concentration, the physical quantity sensor 100 is operated, and the preliminarily acquired relationship between the concentration and the amplitude ratio $U_{O2}/U_{O1}$ is used, thereby allowing the physical quantity sensor 100 to measure the concentration of the measurement object in the atmosphere on the basis of the detected amplitude ratio $U_{O2}/U_{O1}$. Alternatively, the concentration of the measurement object in the atmosphere is set to a known concentration, and subsequently, for instance, the mass of the measurement object adsorbed by the sensor element 6 in a unit surface area is measured, thereby preliminarily acquiring the relationship between the mass and the amplitude ratio $U_{O2}/U_{O1}$. Then, as described above, the use of the preliminarily acquired relationship between the mass and the amplitude ratio $U_{O2}/U_{O1}$ allows the physical quantity sensor 100 to measure the mass of the measurement object on the basis of the detected amplitude ratio $U_{O2}/U_{O1}$. For acquiring the relationship between the mass and the amplitude ratio $U_{O2}/U_{O1}$, a material with a known mass may be caused to adhere to the oscillator and subsequently the amplitude ratio $U_{O2}/U_{O1}$ may be verified. In this embodiment, the mass or concentration of the measurement object is measured using the amplitude ratio $U_{O2}/U_{O1}$. However, the measurement is not limited thereto. Alternatively, the mass or concentration of the measurement object may be measured using the amplitude ratio $U_{O1}/U_{O2}$.

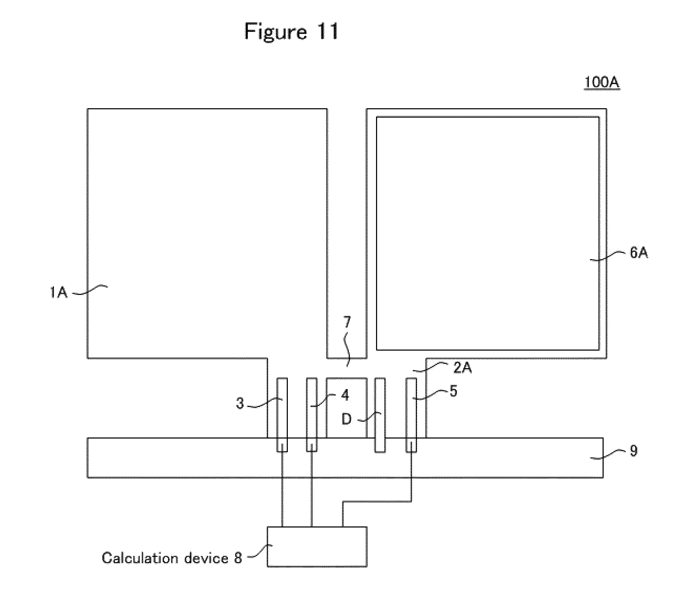

As shown in Figure 1, the shapes of the first oscillator 1 and the second oscillator 2 are rectangular. Although not shown, the oscillators are substantially formed into thin plates. In order to increase the area of the sensor element 6 as large as possible, a modification of the physical quantity sensor 100 according to this embodiment of the present invention may be adopted; as shown in Figure 11, as with the first oscillator 1A and the second oscillator 2A, a site at which the sensor element is provided may be widened. It is preferred that the first oscillator 1 and the second oscillator 2 have the same shape and be made of the same material and further have the same mass and elastic component.

The physical quantity sensor 100 further includes a vibrating device 3. More specifically, as shown in Figure 1, the vibrating device 3 is provided so as to extend over the support member 9 and the first oscillator 1. Since the first oscillator 1 is vibrated by the vibrating device 3 at a prescribed frequency, this oscillator 1 oscillates at the vibrated frequency. In this embodiment, the vibrating device 3 is provided on the first oscillator 1. However, the present invention includes not only this embodiment but also an implementation where the vibrating device 3 is not provided on the first oscillator 1 but may be provided outside of the first oscillator 1 and the first oscillator 1 may be vibrated by an electromagnetic force or an electrostatic attraction. In this embodiment, the vibrating device 3 is provided on the first oscillator 1. However, for the sake of causing the amplitude of the first oscillator 1 and another member that oscillates integrally with the first oscillator 1 and the amplitude of the second oscillator 2 and another member that oscillates integrally with the second oscillator 2 to be identical to each other as much as possible, a dummy pattern D that is made of a material equivalent to that of the vibrating device 3 and has a shape equivalent to that of the vibrating device 3 may be provided on the second oscillator 2, which is on the other side where the vibrating device 3 is not provided.

It is preferred that the vibrating device 3 be provided near the support member 9 on the first oscillator 1 in order to effectively vibrate the first oscillator 1. In this embodiment, the vibrating device 3 is a piezoelectric film that has a piezoelectric effect and is provided in the longitudinal direction of the first oscillator 1 at a position deviating from the center position in the width direction of the main surface of the first oscillator 1. Accordingly, application of a voltage to the vibrating device 3 expands and contracts the vibrating device 3 by a piezoelectric effect, and causes the first oscillator 1 to oscillate in a direction parallel to the main surface. The oscillations propagate to the second oscillator 2 and cause the first oscillator 1 and the second oscillator 2 to oscillate. The first oscillator 1 and the second oscillator 2 are substantially formed into thin plates. Accordingly, oscillations in a direction parallel to these main surfaces can reduce a resistance due to the atmosphere.

The vibrating device 3 may be provided on a side surface of the first oscillator 1. Also in this case, the first oscillator 1 can oscillate in a direction parallel to the main surface. Furthermore, even with arrangement of the vibrating device 3 as shown in Figure 1, appropriate setting of the frequency at which the first oscillator 1 is vibrated allows the vibrating device 3 to vibrate the first oscillator 1 to oscillate in a direction perpendicular to the main surface of the first oscillator 1.

The physical quantity sensor 100 further includes the first detection device 4 and the second detection device 5. More specifically, the first detection device 4 is provided to extend over the first oscillator 1 and the support member 9, and the second detection device 5 is provided to extend over the second oscillator 2 and the support member 9. The first detection device 4 detects the oscillations of the first oscillator 1, more specifically, the amplitude, the phase, the frequency, etc. The second detection device 5 detects the oscillations of the second oscillator 2, more specifically, the amplitude, the phase, the frequency, etc. In this embodiment, the first detection device 4 and the second detection device 5 are piezoelectric films having a piezoelectric effect. The first detection device 4 is provided on the first oscillator 1. The second detection device 5 is provided on the second oscillator 2. However, the present invention includes not only this embodiment but also an implementation where the first detection device 4 is not only a device using an electromagnetic force or an electrostatic attraction but also is a laser displacement meter provided outside of the first oscillator 1. Likewise, the second detection device 5 is not only a device using an electromagnetic force or an electrostatic attraction but also is a laser displacement meter provided outside of the second oscillator 2.

In order to effectively detect oscillations of the first oscillator 1 and the second oscillator 2, the first detection device 4 and the second detection device 5 are respectively provided in the longitudinal direction of the first oscillator 1 at a position deviating from the center position in the width direction of the main surfaces of the oscillators. Accordingly, oscillations of the first oscillator 1 and the second oscillator 2 in directions parallel to the main surfaces expand and contract the first detection device 4 and the second detection device 5, and causes voltages by a piezoelectric effect. As a result, on the basis of the voltages detected by the first detection device 4 and the second detection device 5, the amplitude ratio of the amplitude of the second oscillator 2 to the amplitude of the first oscillator 1 can be calculated by the calculation device 8.

It is preferred that the main surfaces of the first detection device 4 and the second detection device 5 have the same shape and the thicknesses of the first detection device 4 and the second detection device 5 be the same. It is preferred that the first detection device 4 and the second detection device 5 be provided on the first oscillator 1 and the second oscillator 2, having been formed into the same shape, at positions apart by the same distance in the width directions, that is, be provided at the respective same positions. According to such a preferable configuration, the first detection device 4 and the second detection device 5 can detect the same voltage for vibrations having the same intensity. In this embodiment, the first detection device 4 and the second detection device 5 are provided on the main surfaces of the first oscillator 1 and the second oscillator 2, respectively. Alternatively, the device may be provided on respective side surfaces of the first oscillator 1 and the second oscillator 2. Furthermore, the device may be provided on both the main surfaces and side surfaces.

The physical quantity sensor 100 further includes the sensor element 6. The sensor element 6 is provided on the first oscillator 1 or the second oscillator 2. Adsorption of a measurement object by the sensor element 6 increases the mass of the sensor element 6. Desorption of the measurement object from the sensor element 6 reduces the mass of the sensor element 6. It should be noted that the sensor element 6 may be an element that can desorb the measurement object by heating the sensor element 6 adsorbing the measurement object to vaporize the measurement object. The sensor element 6 may be an element that irreversibly adsorbs a measurement object or may be an element that can reversibly adsorb or desorb the target. The sensor element 6 is provided on the first oscillator 1 or the second oscillator 2. Accordingly, the change in mass of the sensor element 6 affects oscillations of the first oscillator 1 or the second oscillator 2. The sensor element 6 may be made of a material appropriately selected from well-known materials disclosed in JP2004-117349A, JP2005-134392A, JP2007-101316A, JP2008-268179A, JP2010-132559A, etc.

For the sake of causing the amplitude of the first oscillator 1 and the member that oscillates integrally with the first oscillator 1 and the amplitude of the second oscillator 2 and the member that oscillates integrally with the second oscillator 2 to be substantially identical to each other, a dummy pattern that is made of a material equivalent to that of the sensor element 6 and has a shape equivalent to that of the sensor element 6 may be provided on the oscillator on which the sensor element 6 is not provided.

The sensor element 6 is provided on the first oscillator 1 or the second oscillator 2. More specifically, the element is provided to substantially have a shape of a thin film on the main surface of the first oscillator 1 or the second oscillator 2 that is substantially formed into a thin plate. The sensor element 6 may be provided only on a side surface of the first oscillator 1 or the second oscillator 2. In the case where the sensor element 6 adsorbs or desorbs the measurement object, it is preferred to configure the sensor element 6 to have an area as wide as possible. It is thus preferred to provide the sensor element 6 on the main surface of the first oscillator 1 or the second oscillator 2 that is substantially formed into a thin plate. It should be noted that the sensor element 6 may be provided on the main surface and the surface opposite to the main surface, or on the main surface, the surface opposite to the main surface and both the side surfaces.

It is preferred to provide the sensor element 6 at a position apart from the support member 9 on the oscillator to be provided with the sensor element 6. That is, it is preferred to provide this element at a position apart from the fixed end (a portion at which the oscillator provided with the sensor element 6 is supported by the support member 9). Such a configuration allows even a slight change in mass to exert a large effect on the amplitude ratio of the oscillator, thereby enabling the measurement accuracy to be increased.

The physical quantity sensor 100 further includes the elastic device 7. The elastic device 7 couples the first oscillator 1 to the second oscillator 2, thereby allowing the oscillations of the first oscillator 1 vibrated by the vibrating device 3 to propagate to the second oscillator 2. More specifically, as shown in Figure 1, the elastic device 7 couples a side surface of the first oscillator 1 to a side surface of the second oscillator 2. Thus, the elastic device 7 can transmit the oscillations of each oscillator to the other oscillator. In this embodiment, one piece of the elastic device 7 is provided. Alternatively, multiple pieces of elastic device 7 may be provided.

In this embodiment, as shown in Figure 1, the elastic device 7 is formed to be rectangular. Alternatively, the elastic device may be folded in a zigzag manner multiple times so as to have mountain portions and valley portions in the direction where the oscillator extends or a direction perpendicular to this direction. In the physical quantity sensor as shown in Figure 1, the nearer to the support member 9 the elastic device 7 is provided, the smaller the spring constant $k_c$ of the elastic device 7 becomes.

In this embodiment, as shown in Figure 1, the side surfaces of the first oscillator 1 and the second oscillator 2 that are substantially formed into thin plates are provided to face each other. Alternatively, the main surface of the first oscillator and the main surface of the second oscillator 2 may be provided to face each other, and the main surfaces may be coupled by the elastic device 7.

The physical quantity sensor 100 further includes the calculation device 8. The calculation device 8 determines a prescribed frequency at which the vibrating device 3 vibrates the first oscillator 1, and calculates the mass or concentration of the measurement object. More specifically, this device determines the prescribed frequency so as to maximize the amplitude $U_{O2}$ of the second oscillator 2 detected by the second detection device 5. When the vibrating device 3 vibrates the first oscillator 1 at the determined frequency, the calculation device 8 computes the ratio $U_{O2}/U_{O1}$ of the amplitude $U_{O2}$ to the amplitude $U_{O1}$ of the first oscillator 1 detected by the first detection device 4, and calculates the mass or concentration of the measurement object on the basis of the computed $U_{O2}/U_{O1}$. More specifically, if the first oscillator 1 and the member that oscillates integrally with the first oscillator 1 and the second oscillator 2 and the member that oscillates integrally with the second oscillator 2 are designed to be made of the same material and have the same shape, the ratio $U_{O2}/U_{O1}$ of the amplitude $U_{O2}$ to the amplitude $U_{O1}$ is approximately one. With the change in mass of the sensor element 6 due to adsorption of the measurement object, in other words, with the amount of adsorption of the measurement object by the sensor element 6, the $U_{O2}/U_{O1}$ changes from one. Even if the amplitude of the first oscillator 1 and the member that oscillates integrally with the first oscillator 1 is not identical to the amplitude of the second oscillator 2 and the member that oscillates integrally with the second oscillator 2 owing to a fabrication error or the like, $U_{O2}/U_{O1}$ changes with the amount of adsorption of the measurement object by the sensor element 6. Here, in this embodiment, the calculation device 8 determines the prescribed frequency so as to maximize the amplitude $U_{O2}$. Alternatively, the prescribed frequency may be determined so as to maximize the ratio $U_{O2}/U_{IN}$ of the amplitude $U_{O2}$ to the amplitude $U_{IN}$ of the vibrating device.

The gain $W_2$ is an overlap of the gain $G_1$ of the first order oscillations and the gain $G_2$ of the second order oscillations of the second oscillator 2. The gain $G_1$ is the ratio of the amplitude of the first order oscillations to the amplitude of the vibrating device 3. The gain $G_2$ is the ratio of the amplitude of the second order oscillations to the amplitude of the vibrating device 3. That is, the gain $W_2$ can be regarded as the ratio of the amplitude $U_{O2}$ of the second oscillator 2 to the amplitude $U_{IN}$ of the vibrating device 3. Since the amplitude $U_{IN}$ is a constant, the amplitude $U_{O2}$ has a relationship of matching with the gain $W_2$ shown in Figure 9. That is, the angular frequency at which the amplitude $U_{O2}$ is maximized corresponds to the angular frequency at which the gain $W_2$ is maximized. More specifically, it is understood that the angular frequencies at which the amplitude $U_{O2}$ is maximized are angular frequencies $\omega_{P1}$ and $\omega_{P2}$.

As described above, the calculation device 8 determines the prescribed angular frequency so as to maximize the amplitude $U_{O2}$. More specifically, the calculation device 8 changes the angular frequency $\omega$ at which the vibrating device 3 vibrates the first oscillator 1, thereby changing the amplitude $U_{O2}$ of the second oscillator 2 detected by the second detection device 5. The calculation device 8 detects the varying amplitude $U_{O2}$ at a prescribed sampling interval, and determines the angular frequency at which the detected amplitude $U_{O2}$ is maximized. The calculation device 8 then determines the determined angular frequency as the prescribed angular frequency at which the vibrating device 3 vibrates the first oscillator 1.

As described above, in the physical quantity sensor 100 according to this embodiment, the amplitude ratio $U_{O2}/U_{O1}$ is independent of the Q factor and does not change. Accordingly, the mass or concentration of the measurement object can be highly accurately measured without being affected by the Q factor.

In a modification of the physical quantity sensor 100 according to this embodiment of the present invention, a calculation device 8A determines a first angular frequency or a second angular frequency at which the phase difference $\phi_1$ between the phase of the oscillations of the first oscillator 1 detected by the first detection device 4 and the phase of the vibrations of the vibrating device 3 is 90°. In this embodiment, the first angular frequency is an angular frequency at which the phase difference $\phi_1$ becomes 90° when the calculation device 8A increases and reduces the angular frequency at which the vibrating device 3 vibrates the first oscillator 1, in proximity to the first order resonant angular frequency. The second angular frequency is an angular frequency at which the phase difference $\phi_1$ becomes 90° when the calculation device 8A increases and reduces the angular frequency at which the vibrating device 3 vibrates the first oscillator 1, in proximity to the second order resonant angular frequency. Here, the proximity of the first order resonance frequency can be, for instance, exemplified as a range from "first order resonance frequency - $\alpha/4$" to "first order resonance frequency + $\alpha/4$", where $\alpha$ is a value acquired by subtracting the first order resonance frequency from the second order resonance frequency. Furthermore, for instance, the proximity of the second order resonance frequency can be exemplified as a range from "second order resonance frequency - $\alpha/4$" to "second order resonance frequency + $\alpha/4$". It should be noted that the resonant angular frequency may be calculated on the basis of the mass at the initial state of the sensor element 6 (in the case where the sensor element 6 can adsorb the measurement object, a state before the sensor element 6 adsorbs the measurement object; in the case where the sensor element 6 can only desorb the measurement object, a state before the sensor element 6 desorbs the measurement object). The calculation device 8A sets the determined first angular frequency or second angular frequency as the prescribed angular frequency at which the vibrating device 3 vibrates the first oscillator 1.

The configuration is not limited to that of this embodiment. Alternatively, the first angular frequency may be set such that, for instance, when the calculation device 8A increases the angular frequency at which the vibrating device 3 vibrates the first oscillator 1 from an angular frequency lower than the first order resonant angular frequency, the phase difference $\phi_1$ becomes 90° at the first time. The second angular frequency may be set such that, for instance, when the calculation device 8A reduces the angular frequency at which the vibrating device 3 vibrates the first oscillator 1 from an angular frequency higher than the second order resonant angular frequency, the phase difference $\phi_1$ becomes 90° at the first time.

As shown in Figures 9 and 10, the angular frequency $\omega_{P1}$ is higher than the resonant angular frequency $\omega_1$ ($\omega_1 = 1$) of the first oscillator 1, and the angular frequency $\omega_{P2}$ is lower than the resonant angular frequency $\omega_2$ ($\omega_2 = 1.001$) of the second oscillator 2. Furthermore, as shown in Figures 9 and 10, when the vibrating device 3 vibrates the first oscillator 1 at the angular frequency $\omega_{P1}$ or $\omega_{P2}$ (the angular frequency maximizing the amplitude $U_{O2}$) at which the gain $W_2$ is at peaks, the phase difference $\phi_1$ between the amplitude of the vibrating device 3 and the amplitude of the first oscillator 1 becomes 90°. However, the angular frequency where the phase difference $\phi_1$ is 90° is not necessarily the angular frequency where the amplitude $U_{O2}$ is maximized. More specifically, there is an angular frequency where the phase difference $\phi_1$ is 90° between the angular frequency $\omega_{P1}$ and the angular frequency $\omega_{P2}$. Accordingly, the calculation device 8A is required to set the first angular frequency or the second angular frequency as the prescribed angular frequency. Both the first angular frequency and the second angular frequency are angular frequencies at which the amplitude $U_{O2}$ is maximized. Accordingly, if the calculation device 8A sets any one of the first angular frequency and the second angular frequency as the prescribed angular frequency, the vibrating device 3 can vibrate the first oscillator 1 at the angular frequency where the amplitude $U_{O2}$ is maximized.

The phase difference $\phi_1$ is not instantaneously measured, which is in a manner different from that for the maximum value of the amplitude. Instead, the phase difference is acquired by measuring continuous variation in amplitude. Accordingly, measurement of the phase difference is hardly affected by noise or the like. Thus, the calculation device 8A can suppress adverse effects due to noise or the like and determine the second angular frequency. Accordingly, the calculation device 8A can easily determine the prescribed angular frequency at which the amplitude $U_{O2}$ is maximized.

It is preferred that the vibrating device 3 and the first detection device 4 be piezoelectric films which be provided on the first oscillator 1 and have a piezoelectric effect, and that the second detection device 5 be a piezoelectric film which be provided on the second oscillator 2 and have a piezoelectric effect.

According to such a preferable configuration, the vibrating device 3 and the first detection device 4 are provided on the first oscillator 1, and the second detection device 5 is provided on the second oscillator 2. Accordingly, the entire size of the physical quantity sensor 100 can be reduced.

It is preferred that if the sensor element 6 have characteristics capable of adsorbing the measurement object, the amplitude $U_{O1}$ be substantially identical to the amplitude $U_{O2}$ before the sensor element 6 adsorb the measurement object, and, if the sensor element 6 have characteristics capable of only desorbing the measurement object, the amplitude $U_{O1}$ be substantially identical to the amplitude $U_{O2}$ before the sensor element 6 desorb the measurement object.

The physical quantity sensor 100 of this embodiment is designed such that the amplitude of the first oscillator 1 and the member that oscillates integrally with the first oscillator 1 is substantially identical to the amplitude of the second oscillator 2 and the member that oscillates integrally with the second oscillator 2. However, a case can be considered where both the amplitudes are not substantially identical to each other owing to fabrication error or the like. In this case, if both the masses are identical, both the amplitudes are identical to each other. Accordingly, the first oscillator 1 or the second oscillator 2 is trimmed by laser or the like such that both the amplitudes are substantially identical to each other. That is, the mass of the first oscillator 1 or the second oscillator 2 is adjusted such that both the amplitudes are substantially identical to each other. As a result, the physical quantity sensor 100 is formed where the amplitude of the first oscillator 1 and the member that oscillates integrally with the first oscillator 1 is substantially identical to the amplitude of the second oscillator 2 and the member that oscillates integrally with the second oscillator 2.

In this embodiment, the first oscillator 1 is provided with the vibrating device 3 and the first detection device 4, and the second oscillator 2 is provided with the second detection device 5 and the sensor element 6. Accordingly, before the sensor element 6 adsorbs the measurement object, the sum of masses of the first oscillator 1, the vibrating device 3 and the first detection device 4 is substantially identical to the sum of masses of the second oscillator 2, the second detection device 5 and the sensor element 6. That is, after the physical quantity sensor 100 is fabricated, the first oscillator 1 and the member that oscillates integrally with the first oscillator 1, and the second oscillator 2 and the member that oscillates integrally with the second oscillator 2 are caused to oscillate, and it is adjusted such that the ratio of the amplitude of the second oscillator 2 to the amplitude of the first oscillator 1 is approximately one.

In the foregoing preferable configuration, as shown in Figure 6 and the like, the rate of change in ratio $U_{O2}/U_{O1}$ of the amplitude $U_{O2}$ to the amplitude $U_{O1}$ due to the change in mass of the sensor element 6 increases, which facilitates detecting the change in mass. That is, the measurement accuracy of the physical quantity sensor 100 can be improved.

Preferably, the sensor element 6 is an adsorption film capable of adsorbing the measurement object.

According to such a preferable configuration, while the first oscillator 1 or the second oscillator 2 oscillates, the air resistance due to the atmosphere can be reduced, which allows the amplitude and phase of vibrations to be measured more correctly.

The present invention is not limited to the configuration in the foregoing embodiment. Instead, various modifications can be allowed within a scope without changing the gist of the invention.

[Reference Signs List]

| | |
|---|---|
| 1, 1A | First oscillator |
| 2, 2A | Second oscillator |
| 3 | Vibrating device |
| 4 | First detection device |
| 5 | Second detection device |
| 6, 6A | Sensor element |
| 7 | Elastic device |
| 8 | Calculation device |
| 9 | Support member |
| 100, 100A | Physical quantity sensor |
| D | Dummy pattern |

**Claims**

1. A physical quantity sensor, comprising:

    a support member;
    a first oscillator supported by the support member;
    a vibrating device adapted to vibrate the first oscillator at a prescribed frequency;
    a first detection device adapted to detect oscillations of the first oscillator;
    a second oscillator supported by the support member;
    a second detection device adapted to detect oscillations of the second oscillator;
    a sensor element that is provided on the first oscillator or the second oscillator and has characteristics capable of adsorbing and/or desorbing a measurement object;
    an elastic device adapted to couple the first oscillator and the second oscillator to each other; and
    a calculation device adapted to determine the prescribed frequency and to calculate a mass or concentration of the measurement object,
    wherein the calculation device is adapted to determine the prescribed frequency so as to maximize an amplitude $U_{O2}$ of the second oscillator detected by the second detection device, and is adapted to calculate the mass or concentration of the measurement object based on a ratio $U_{O2}/U_{O1}$ of the amplitude $U_{O2}$ of the second oscillator detected by the second detection device to an amplitude $U_{O1}$ of the first oscillator detected by the first detection device when the vibrating device vibrates the first oscillator at the determined frequency.

2. A physical quantity sensor, comprising:

   a support member;
   a first oscillator supported by the support member;
   a vibrating device adapted to vibrate the first oscillator at a prescribed frequency;
   a first detection device adapted to detect oscillations of the first oscillator;
   a second oscillator supported by the support member;
   a second detection device adapted to detect oscillations of the second oscillator;
   a sensor element that is provided on the first oscillator or the second oscillator and has characteristics capable of adsorbing and/or desorbing a measurement object;
   an elastic device adapted to couple the first oscillator and the second oscillator to each other; and
   a calculation device adapted to determine the prescribed frequency and to calculate a mass or concentration of the measurement object,
   wherein the calculation device is adapted to increase and reduce a frequency at which the vibrating device vibrates the first oscillator in proximity to a first order resonance frequency or proximity to a second order resonance frequency to determine the prescribed frequency such that a phase difference between a phase of oscillations of the first oscillator detected by the first detection device and a phase of vibrations of the vibrating device is 90°, and is adapted to calculate the mass or concentration of the measurement object based on a ratio $U_{O2}/U_{O1}$ of an amplitude $U_{O2}$ of the second oscillator detected by the second detection device to an amplitude $U_{O1}$ of the first oscillator detected by the first detection device when the vibrating device vibrates the first oscillator at the determined frequency.

3. The physical quantity sensor according to claim 1 or 2,
   wherein the vibrating device and the first detection device are piezoelectric films that are provided on the first oscillator and have a piezoelectric effect, and
   the second detection device is a piezoelectric film that is provided on the second oscillator and has a piezoelectric effect.

4. The physical quantity sensor according to any one of claims 1 to 3,
   wherein if the sensor element has characteristics capable of adsorbing the measurement object, the amplitude $U_{O1}$ and the amplitude $U_{O2}$ are substantially identical to each other before the sensor element adsorbs the measurement object, and
   if the sensor element has characteristics capable only of desorbing the measurement object, the amplitude $U_{O1}$ and the amplitude $U_{O2}$ are substantially identical to each other before the sensor element desorbs the measurement object.

5. The physical quantity sensor according to any one of claims 1 to 4, wherein the sensor element is an adsorption film capable of adsorbing the measurement object.

# Figure 1

# Figure 2

# Figure 3

# Figure 4

Rate of change of mass $m_1$ (relative value)

# Figure 5

Rate of change of mass $m_1$ (relative value)

# Figure 6

# Figure 7

Figure 8

Figure 9

Figure 10

# Figure 11

100A

1A

6A

7

2A

3      4      5

D

9

Calculation device 8

**INTERNATIONAL SEARCH REPORT**

| International application No. |
| --- |
| PCT/JP2013/058688 |

| A. CLASSIFICATION OF SUBJECT MATTER |
| --- |
| *G01N5/02*(2006.01)i |

According to International Patent Classification (IPC) or to both national classification and IPC

| B. FIELDS SEARCHED |
| --- |
| Minimum documentation searched (classification system followed by classification symbols) |
| G01N5/00-5/04, G01N29/00-29/28 |

Documentation searched other than minimum documentation to the extent that such documents are included in the fields searched

| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
JSTPlus/JMEDPlus/JST7580(JDreamIII), Science Direct

| C. DOCUMENTS CONSIDERED TO BE RELEVANT | | |
| --- | --- | --- |
| Category* | Citation of document, with indication, where appropriate, of the relevant passages | Relevant to claim No. |
| A | Matthew Spletzer, Arvind Raman, Alexander Q. Wu, Xianfan Xu, Ron Reifenberger, Ultrasensitive mass sensing using mode localization in coupled microcantilevers, Applied Physics Letters, 2006, Volume 88, Issue 25, 254102 | 1-5 |
| A | JP 11-173968 A (Riken Corp.), 02 July 1999 (02.07.1999), entire text; all drawings (Family: none) | 1-5 |

☐ Further documents are listed in the continuation of Box C.　☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07 June, 2013 (07.06.13) | 18 June, 2013 (18.06.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

22

## REFERENCES CITED IN THE DESCRIPTION

**Patent documents cited in the description**

- JP 2004117349 A
- JP 2005134392 A
- JP 2007101316 A
- JP 2008268179 A
- JP 2010132559 A

**Non-patent literature cited in the description**

- Ultrasensitive mass sensing using mode localization in coupled microcantilevers. **SPLETZER et al.** Applied Physics Letters. American Institute of Physics, 2006, vol. 88, 254102